# EUROPEAN PATENT APPLICATION

(11) **EP 4 572 250 A1**
(43) Date of publication of application: **18.06.2025**
(21) Application number: 22954355.8
(22) Date of filing: 09.08.2022
(51) Int. Cl.: H04L 27/00

(54) **SENDING METHOD AND APPARATUS FOR ERROR-SOURCE INFORMATION, RECEIVING METHOD AND APPARATUS OF ERROR-SOURCE INFORMATION, AND DEVICE AND MEDIUM**

(71) Applicant: Beijing Xiaomi Mobile Software Co., Ltd., Beijing 100085 (CN)
(72) Inventor: LI, Xiaolong, Beijing 100085 (CN)
(74) Representative: Dehns Germany Partnerschaft mbB
(86) International application number: PCT/CN2022/111269
(87) International publication number: WO 2024/031379

(57) **Abstract**

The present application relates to the field of mobile communications. Provided are a sending method and apparatus for error-source information, a receiving method and apparatus for error-source information, and a device and a medium. The method comprises: a terminal sending, to an LMF, error-source information of positioning, wherein the error-source information is used by the LMF to determine the positioning integrity of the positioning; or the LMF sending to the terminal, error-source information of positioning, wherein the error source information is used by the terminal to determine the positioning integrity of the positioning, and the positioning is downlink positioning or a combination of uplink and downlink positioning. A terminal sending, to an LMF, error-source information of positioning, or the LMF sending, to the terminal, error-source information of positioning provides a manner in which the terminal and the LMF exchange error-source information regarding downlink positioning or regarding a combination of uplink and downlink positioning. According to the error-source information, the LMF or the terminal can determine the positioning integrity of the downlink positioning or the combination of uplink and downlink positioning.

## Description

### TECHNICAL FIELD

The present application relates to the field of mobile communications, and in particular, to a method for transmitting error source information, a method for receiving error source information, an apparatus, a device, and a medium.

### BACKGROUND

For a positioning technology, a concept of positioning integrity is introduced into the new radio (NR). Currently, positioning integrity for the Assisted-Global Navigation Satellite System (A-GNSS) positioning technology has been standardized. It is mainly included that a Location Management Function (LMF) provides integrity parameters of an error source (assistance information) to a terminal, and the terminal determines the positioning integrity of the A-GNSS according to the parameter and reports the determination result of the positioning integrity to the LMF.

For a specific implementation of determining the positioning integrity for the positioning technology based on the Radio Access Technology (RAT), further discussion and research are needed.

### SUMMARY

According to embodiments of the present application, there is provided a method for transmitting error source information, a method for receiving error source information, an apparatus, a device, and a medium. The technical solutions are as follows.

According to an aspect of the present application, there is provided a method for transmitting error source information, and the method includes:
transmitting, by a terminal, error source information for positioning to a location management function (LMF), where the error source information is used by the LMF to determine positioning integrity of the positioning; or
transmitting, by the LMF, error source information for positioning to the terminal, where the error source information is used by the terminal to determine positioning integrity of the positioning;
where the positioning includes downlink positioning or positioning combining uplink and downlink.

According to an aspect of the present disclosure, there is provided a method for receiving error source information, and the method includes:
receiving, by an LMF, error source information for positioning transmitted by a terminal, where the error source information is used by the LMF to determine positioning integrity of the positioning; or
receiving, by the terminal, error source information for positioning transmitted by the LMF, where the error source information is used by the terminal to determine positioning integrity of the positioning;
where the positioning includes downlink positioning or positioning combining uplink and downlink.

According to another aspect of the present application, there is provided an apparatus for transmitting error source information, and the apparatus includes:
a transmitting module, configured to: transmit, by the apparatus, error source information for positioning to an LMF, where the error source information is used by the LMF to determine positioning integrity of the positioning; or
transmit, by the apparatus, error source information for positioning to a terminal, where the error source information is used by the terminal to determine positioning integrity of the positioning;
where the positioning includes downlink positioning or positioning combining uplink and downlink.

According to another aspect of the present application, there is provided an apparatus for receiving error source information, and the apparatus includes:
a receiving module, configured to: receive, by the apparatus, error source information for positioning transmitted by a terminal, where the error source information is used by the apparatus to determine positioning integrity of the positioning; or
receive, by the apparatus, error source information for positioning transmitted by an LMF, where the error source information is used by the apparatus to determine positioning integrity of the positioning;
where the positioning includes downlink positioning or positioning combining uplink and downlink.

According to another aspect of the present application, there is provided a communication device, and the communication device includes: a processor; a transceiver connected to the processor, and a memory configured to store an executable instruction by the processor, where the processor is configured to load and execute the executable instruction to implement the method for transmitting error source information or the method for receiving error source information according to the foregoing aspects.

According to another aspect of the present application, there is provided a computer-readable storage medium, where an executable instruction is stored in the readable storage medium, and the executable instruction is loaded and executed by a processor to implement the method for transmitting error source information or the method for receiving error source information according to the foregoing aspects.

According to another aspect of the present application, there is provided a chip, where the chip includes a programmable logic circuit and/or a program instruction, and when the chip runs on a computer device, the chip is configured to implement the method for transmitting error source information or the method for receiving error source information according to the foregoing aspects.

According to another aspect of the present application, there is provided a computer program product or a computer program, where the computer program product or the computer program includes a computer instruction, the computer instruction is stored in a computer-readable storage medium, and the processor reads, from the computer-readable storage medium, and executes the computer instruction, to cause the computer device to perform the method for transmitting error source information or the method for receiving error source information according to the foregoing aspects.

The technical solutions provided in the present application include at least the following beneficial effects.

By transmitting the error source information for positioning to the LMF by the terminal, or transmitting the error source information for positioning to the terminal by the LMF, there is provided an implementation of exchanging error source information between the terminal and the LMF in downlink positioning or positioning combining uplink and downlink. According to the error source information, the LMF or the terminal is enabled to determine the positioning integrity of the downlink positioning or the positioning integrity of the positioning combining uplink and downlink, thus providing an implementation of determining the positioning integrity for the RAT-dependent positioning technology.

### BRIEF DESCRIPTION OF THE DRAWINGS

In order to more clearly illustrate the technical solutions in the embodiments of the present application, the accompanying drawings required to be used in the description of the embodiments are briefly described below. Obviously, the accompanying drawings in the following description are merely some embodiments of the present application, and for those of ordinary skill in the art, other drawings may be obtained according to these accompanying drawings without creative efforts.
FIG. 1 is a schematic diagram of a communication system provided according to an example embodiment of the present application;
FIG. 2 is a flowchart of a method for transmitting error source information provided according to an example embodiment of the present application;
FIG. 3 is a flowchart of a method for receiving error source information provided according to an example embodiment of the present application;
FIG. 4 is a flowchart of a method for transmitting error source information provided according to an example embodiment of the present application;
FIG. 5 is a flowchart of a method for receiving error source information provided according to an example embodiment of the present application;
FIG. 6 is a flowchart of a method for transmitting error source information provided according to an example embodiment of the present application;
FIG. 7 is a flowchart of a method for transmitting error source information provided according to an example embodiment of the present application;
FIG. 8 is a flowchart of a method for transmitting error source information provided according to an example embodiment of the present application;
FIG. 9 is a structural block diagram of an apparatus for transmitting error source information provided according to an example embodiment of the present application;
FIG. 10 is a structural block diagram of an apparatus for transmitting error source information provided according to an example embodiment of the present application;
FIG. 11 is a structural block diagram of an apparatus for receiving error source information provided according to an example embodiment of the present application;
FIG. 12 is a structural block diagram of an apparatus for receiving error source information provided according to an example embodiment of the present application;
FIG. 13 is a schematic structural diagram of a communication device provided according to an example embodiment of the present application.

### DETAILED DESCRIPTION

To make the objectives, technical solutions, and advantages of the present application clearer, implementations of the present application are further described in detail with reference to the accompanying drawings.

Example embodiments will be described in detail here, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present application. By contrast, they are merely examples of apparatuses and methods consistent with some aspects of the present application as detailed in the appended claims.

The terms used in the present disclosure are merely for the purpose of describing particular embodiments, and are not intended to limit the present disclosure. As used in the present disclosure and the appended claims, the singular forms "a", "the", and "the" are intended to include the plural forms as well, unless the context clearly indicates other meanings. It should also be understood that the term "and/or" as used here refers to and includes any or all possible combinations of one or more associated listed items.

It should be understood that although the terms "first", "second", "third", or the like, may be used in the present disclosure to describe various information, these information should not be limited to these terms. These terms are only used to distinguish the same type of information from each other. For example, without departing from the scope of the present disclosure, the first information may also be referred to as second information, and similarly, the second information may also be referred to as first information. Depending on the context, the word "if" as used here may be interpreted as "at the time..." or "when..." or "in response to determining... ".

First, related terms involved in the embodiments of the present application are introduced.

The positioning integrity of the A-GNSS is introduced.

For a positioning technology, the concept of positioning integrity is introduced in NR. The positioning integrity is used to determine the reliability of the accuracy of the location-related data provided by the positioning system, and the capability of providing valid alert timely to a Location Service (LCS) client when the positioning system does not satisfy the predetermined operation condition.

Currently, the positioning integrity for the A-GNSS positioning technology has been standardized. It is mainly included that an LMF provides integrity parameters of an error source (assistance information) to a terminal. For example, mapping of integrity parameters is shown in Table 1.

**TABLE 1**

| Error | GNSS Assistance Data | Integrity Fields | | | | |
|---|---|---|---|---|---|---|
| | | Integrity Alerts | Integrity Bounds (Mean) | Integrity Bounds (StdDev) | Residual Risks | Integrity Correlation Times |
| Orbit | SSR (State Space Representation ) | Real-Time Integrity | Mean Orbit Error | Variance Orbit Error | Probability of Onset of Constellation Fault | Orbit Range Error Correlation Time |
| | | | Mean Orbit Rate Error | Variance Orbit Rate Error | | |
| | Orbit Corrections | | | | Probability of Onset of Satellite Fault | Orbit Range Rate Error Correlation Time |
| Clock | SSR Clock Corrections | | Mean Clock Error | Standard Deviation Clock Error | Mean Constellation Fault Duration | Clock Range Error Correlation Time |
| | | | Mean Clock Rate Error | | | |
| | | | | Standard Deviation Clock Rate Error | Mean Satellite Fault Duration | Clock Range Rate Error Correlation Time |
| Code Bias | SSR Code Bias | | Mean Code Bias Error | Standard Deviation Code Bias Error | | |
| | | | Mean Code Bias Rate Error | | | |
| | | | | Standard Deviation Code Bias Rate Error | | |
| Phase Bias | SSR Phase Bias | | Mean Phase Bias Error | Standard Deviation Phase Bias Error | | |
| | | | Mean Phase Bias Rate Error | | | |
| | | | | Standard Deviation Phase Bias Rate Error | | |
| Ionosphere | SSR STEC (Slant Total Electron Content) Correction | Ionosphere DNU (Do Not Use) | Mean Ionosphere Error | Standard Deviation Ionosphere Error | Probability of Onset of Ionosphere Fault | Ionosphere Range Error Correlation Time |
| | | | Mean Ionosphere Rate Error | Standard Deviation Ionosphere Rate Error | Mean Ionosphere Fault Duration | Ionosphere Range Rate Error Correlation |
| | | | | | | Time |
| Troposphere Vertical Hydro Static Delay | SSR Gridded Corrections | Troposphe re DNU | Mean Troposphere Vertical Hydro Static Delay Error | Standard Deviation Troposphere Vertical Hydro Static Delay Error | Probability of Onset of Troposphere Fault | Troposphere Range Error Correlation Time |
| | | | Mean Troposphere Vertical Hydro Static Delay Rate Error | | Mean Troposphere Fault Duration | Troposphere Range Rate Error Correlation Time |
| | | | | Standard Deviation Troposphere Vertical Hydro Static Delay Rate Error | | |
| Troposphere Vertical Wet Delay | | | Mean Troposphere Vertical Wet Delay Error | Standard Deviation Troposphere Vertical Wet Delay Error | | |
| | | | Mean Troposphere Vertical Wet Delay Rate Error | Standard Deviation Troposphere Vertical Wet Delay Rate Error | | |

The terminal can determine the positioning integrity for the A-GNSS according to the foregoing parameters, and report the determination result of the positioning integrity to the LMF.

In the related art, there is only provided a manner of determining the positioning integrity based on the A-GNSS. At present, the positioning integrity problem of the positioning technology based on RAT-dependent are being studied, for example, positioning integrity problems of the positioning technology such as uplink (UL) - Time Difference Of Aarrival (TDOA), downlink (DL) - TDOA, UL - Angle-Of-Arrival (AOA), and DL - Angle-Of-Departure (AOD), etc. Optionally, in the embodiments of the present application, the RAT-dependent positioning technology includes downlink positioning or positioning combining uplink and downlink. For a specific implementation of determining the positioning integrity for the RAT-dependent positioning technology, further discussion and research are needed.

According to the method provided in the embodiments of the present application, there is provided an implementation of exchanging error source information between a terminal and an LMF in downlink positioning or positioning combining uplink and downlink. According to the error source information, the terminal or the LMF is enabled to determine the positioning integrity of the downlink positioning or the positioning integrity of the positioning combining uplink and downlink, thus providing an implementation of determining the positioning integrity for the RAT-dependent positioning technology.

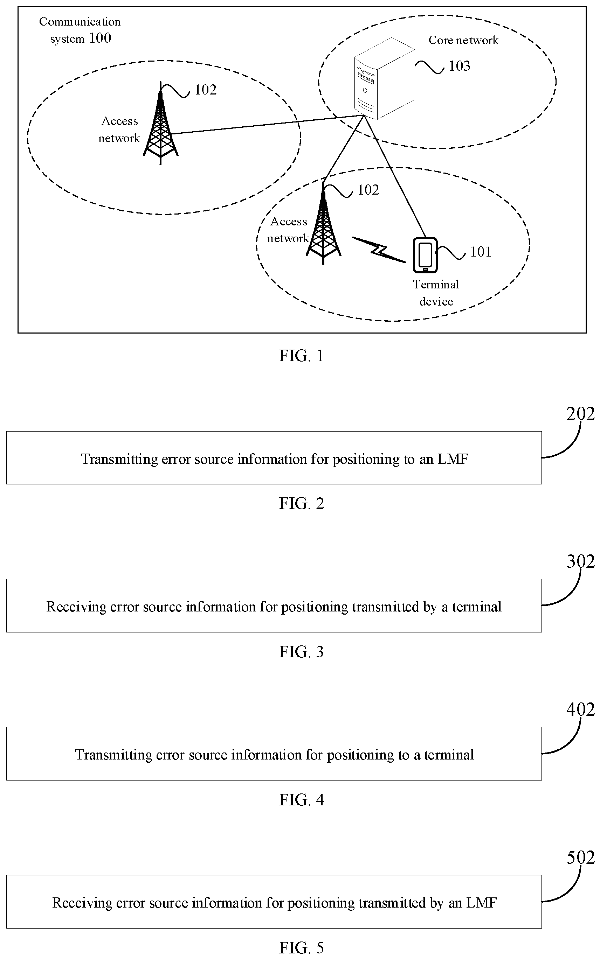

FIG. 1 is a schematic diagram of a communication system provided according to an example embodiment of the present application. The communication system 100 may include a terminal 101, an access network device 102, and a core network device 103.

Generally, there are a plurality of terminals 101. One or more terminals 101 may be distributed in a cell managed by each access network device 102. The terminals 101 may include various handheld devices, vehicle-mounted devices, wearable devices, computing devices, or other processing devices connected to a wireless modem, various forms of user equipment (UE), mobile stations (MS), or the like. For ease of description, in the embodiments of the present application, the foregoing devices are collectively referred to as terminals.

The access network device 102 is an apparatus deployed in an access network to provide a wireless communication function for the terminal 101. The access network device 102 may include various forms of macro base stations, micro base stations, relay stations, and access points. In systems using different radio access technologies, the names of devices having an access network device function may be different, for example, it is referred to as a gNodeB or a gNB in a 5th generation (5G) mobile communication technology NR system. With the evolution of communication technologies, the name of "access network device" may change. For ease of description, in the embodiments of the present application, the foregoing apparatus that provides a wireless communication function for the terminal 101 is collectively referred to as an access network device. A connection may be established between the access network device 102 and the terminal 101 through an air interface, for performing communication through the connection, which includes signaling and data interaction. There may be a plurality of access network devices 102, and communication may also be performed two adjacent access network devices 102 in a wired or wireless manner. The terminal 101 may perform handover between different access network devices 102; that is, a connection may be established between the terminal 101 and a different access network device 102.

Functions of the core network device 103 are mainly to provide a user connection and management of a user, complete carrying of a service, and provide, as a carrier network, an interface to an external network. The access network device 102 and the core network device 103 may be collectively referred to as network devices. For example, the network device in the embodiment of the present application may refer to an access network device. The core network device 103 and the access network device 102 communicate with each other through a certain air technology. A communication relationship may be established between the terminal 101 and the core network device 103 through the access network device 102. For example, the core network device in the embodiments of the present application refers to an LMF.

The "5G NR system" in the embodiments of the present application may also be referred to as a 5G system or an NR system, the meaning of which may be understood by those skilled in the art. The technical solutions described in the embodiments of the present application may be applied to a 5G NR system, or may be applied to a subsequent evolution system of a 5G NR system.

FIG. 2 is a flowchart of a method for transmitting error source information provided according to an embodiment of the present application. The method may be applied to a terminal. The method includes the following step.

In step 202, error source information for positioning is transmitted to an LMF.

The positioning includes downlink positioning or positioning combining uplink and downlink. For example, the positioning refers to positioning based on DL-TDOA or DL-AOD or multi-Round Trip Time (multi-RTT), where the positioning based on multi-RTT is the positioning combining uplink and downlink. The error source information is used by the LMF to determine the positioning integrity of the positioning.

Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a protection level (PL) being greater than an alert limit (AL), where PL is obtained by calculating according to the error source information, and AL is preset. AL is the allowed maximum positioning error that enables the positioning system to be used in a predetermined application.

The error source information transmitted by the terminal is determined by the terminal. Optionally, the error source information includes at least one of the following:
a measurement error of the terminal;
a timing error of the terminal; or
a beam or antenna error of the terminal.

Among them, the measurement error of the terminal includes an error generated when the terminal performs measurement, which includes an error generated when the terminal performs measurement on the positioning reference signal. The timing error of the terminal includes an error related to the timing of the terminal; for example, the timing error of the terminal includes the time difference of a transmitting signal between the antenna of the terminal and the baseband, and the clock deviation of the terminal itself, such as the difference between the clock of the terminal and the GNSS time. The beam or antenna error of the terminal includes an error related to a beam received or transmitted by the terminal or an antenna of the terminal; for example, the beam or antenna error of the terminal includes a deviation between a beam transmitting direction used by the terminal and an actual transmitting direction.

Optionally, the measurement error of the terminal includes at least one of the following:
a receiving-transmitting timing difference (Rx-Tx timing difference);
a reference signal time difference (RSTD);
a positioning reference signal (PRS)-reference signal receiving power (RSRP); or
a PRS-reference signal received path power (RSRPP).

Optionally, the error source information transmitted by the terminal to the LMF is carried in a Long Term Evolution Location Protocol (LPP) message, for example, it is carried in LPP Provide Location Information.

Optionally, the terminal may actively transmit the error source information to the LMF. Alternatively, the error source information transmitted by the terminal is transmitted based on a request of the LMF. That is, the terminal may receive a request transmitted by the LMF, where the request is used to indicate the terminal to transmit the foregoing error source information. Optionally, the request is carried in an LPP message. For example, the request is carried in LPP Request Location Information.

Optionally, the terminal may further transmit an error source information capability supported by the terminal to the LMF. For example, before the LMF transmits the request, the terminal transmits the error source information capability supported by the terminal to the LMF, where the error source information capability supported by the terminal is used to reflect error source information supported by the terminal. The LMF may obtain the error source information capability supported by the terminal, so that the LMF may determine whether to transmit the request to the terminal. Furthermore, when the LMF requests the error source information to the terminal, the LMF may further request the error source information in a targeted manner according to the error source information capability supported by the terminal. For example, the LMF may request the timing error of the terminal in the error source information supported by the terminal.

Optionally, the terminal may further transmit Do Not Use (DNU) information of the error source information to the LMF. The DNU information is used to indicate the LMF not to use the error source information to determine the positioning integrity of the positioning. For example, if the terminal transmits the measurement error of the terminal and the timing error of the terminal to the LMF, since the measurement value of the terminal exceeds the distribution range of normal data, the terminal may transmit the DNU information to the LMF to indicate the LMF not to use the measurement error source of the terminal to determine the positioning integrity of the positioning. Optionally, the LMF may then use the timing error of the terminal to determine the positioning integrity of the positioning.

In summary, according to the method provided in the embodiment, by transmitting the error source information for positioning to the LMF by the terminal, there is provided an implementation of exchanging error source information between the terminal and the LMF in downlink positioning or positioning combining uplink and downlink. According to the error source information, the LMF is enabled to determine the positioning integrity of the downlink positioning or the positioning integrity of the positioning combining uplink and downlink, thus providing an implementation of determining the positioning integrity for the RAT-dependent positioning technology.

FIG. 3 is a flowchart of a method for receiving error source information provided according to an embodiment of the present application. The method may be applied to an LMF. The method includes the following step.

In step 302, error source information for positioning transmitted by the terminal is received.

The positioning includes downlink positioning or positioning combining uplink and downlink. The error source information is used by the LMF to determine the positioning integrity of the positioning.

Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

The error source information transmitted by the terminal is determined by the terminal. Optionally, the error source information includes at least one of the following:
a measurement error of the terminal;
a timing error of the terminal; or
a beam or antenna error of the terminal.

Among them, the measurement error of the terminal includes an error generated when the terminal performs measurement, which includes an error generated when the terminal performs measurement on the positioning reference signal. The timing error of the terminal includes an error related to the timing of the terminal. The beam or antenna error of the terminal includes an error related to a beam received or transmitted by the terminal or an antenna of the terminal. Optionally, the measurement error of the terminal includes at least one of the following:
a receiving-transmitting timing difference;
an RSTD;
a PRS-RSRP; or
a PRS-RSRPP.

Optionally, the error source information transmitted by the terminal to the LMF is carried in an LPP message, for example, it is carried in LPP Provide Location Information.

Optionally, the terminal may actively transmit the error source information to the LMF. Alternatively, the error source information transmitted by the terminal is transmitted based on a request of the LMF. That is, the LMF may transmit a request to the terminal, where the request is used to indicate the terminal to transmit the foregoing error source information. Optionally, the request is carried in an LPP message. For example, the request is carried in LPP Request Location Information.

Optionally, the LMF may further receive an error source information capability supported by the terminal transmitted by the terminal. For example, before the LMF transmits the request, the terminal transmits the error source information capability supported by the terminal to the LMF, where the error source information capability supported by the terminal is used to reflect error source information supported by the terminal. The LMF may obtain the error source information capability supported by the terminal, so that the LMF may determine whether to transmit the request to the terminal. Furthermore, when the LMF requests the error source information to the terminal, the LMF may further request the error source information in a targeted manner according to the error source information capability supported by the terminal. For example, the LMF may request the timing error of the terminal in the error source information supported by the terminal.

Optionally, the LMF may further receive the DNU information of the error source information transmitted by the terminal. The DNU information is used to indicate the LMF not to use the error source information to determine the positioning integrity of the positioning. For example, if the terminal transmits the measurement error of the terminal and the timing error of the terminal to the LMF, since the measurement value of the terminal exceeds the distribution range of normal data, the terminal may transmit the DNU information to the LMF to indicate the LMF not to use the measurement error source of the terminal to determine the positioning integrity of the positioning. Optionally, the LMF may then use the timing error of the terminal to determine the positioning integrity of the positioning.

In summary, according to the method provided in the embodiment, by transmitting the error source information for positioning to the LMF by the terminal, there is provided an implementation of exchanging error source information between the terminal and the LMF in downlink positioning or positioning combining uplink and downlink. According to the error source information, the LMF is enabled to determine the positioning integrity of the downlink positioning or the positioning integrity of the positioning combining uplink and downlink, thus providing an implementation of determining the positioning integrity for the RAT-dependent positioning technology.

FIG. 4 is a flowchart of a method for transmitting error source information provided according to an embodiment of the present application. The method may be applied to an LMF. The method includes the following step.

In step 402, error source information for positioning is transmitted to a terminal.

The positioning includes downlink positioning or positioning combining uplink and downlink. For example, the positioning refers to positioning based on DL-TDOA or DL-AOD or multi-RTT. The error source information is used by the terminal to determine the positioning integrity of the positioning.

Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

Optionally, the error source information includes at least one of the following:
a location information error of a network device;
a time synchronization error between different network devices;
a timing error of the network device; or
a beam or antenna error of the network device.

Among them, the network device refers to a device participating in the foregoing positioning, for example, the network device is a base station (gNB) or a Transmit Receive Point (TRP) participating in the positioning. The location information error of the network device includes an error of location information of the network device itself. For example, the location information error of the network device is a deviation of the location information determined by the network device based on the GNSS. The time synchronization error between different network devices includes the deviation in local time between different network devices participating in the positioning. The timing error of the network device includes an error related to the timing of the network device. For example, the timing error of the network device is a difference between the clock of the network device and the GNSS time. The beam or antenna error of the network device includes an error related to a beam received or transmitted by the network device or an antenna of the network device. For example, the beam or antenna error of the network device includes a deviation between a beam transmitting direction used by the network device and an actual transmitting direction.

Optionally, the error source information is determined by the network device and reported to the LMF, or obtained by the LMF requesting to the network device.

Optionally, the error source information transmitted by the LMF to the terminal is carried in an LPP message, for example, it is carried in LPP Provide Assistance Information.

Optionally, the LMF may actively transmit the error source information to the terminal. Alternatively, the error source information transmitted by the LMF is transmitted based on a request of the terminal. That is, the LMF may receive a request transmitted by the terminal, where the request is used to indicate the LMF to transmit the foregoing error source information. Optionally, the request is carried in an LPP message, for example, it is carried in LPP Request Assistance Information.

Optionally, the LMF may further transmit the DNU information of the error source information to the terminal. The DNU information is used to indicate the terminal not to use the error source information to determine the positioning integrity of the positioning. For example, if the LMF transmits the location information error of the network device and the timing error of the network device to the terminal, since the location information value of the network device exceeds the distribution range of normal data, the LMF may transmit the DNU information to the terminal to indicate the terminal not to use the location information error source of the network device to determine the positioning integrity of the positioning. Optionally, the terminal may then use the timing error of the network device to determine the positioning integrity of the positioning.

In summary, according to the method provided in the embodiment, by transmitting the error source information for positioning to the terminal by the LMF, there is provided an implementation of exchanging error source information between the terminal and the LMF in downlink positioning or positioning combining uplink and downlink. According to the error source information, the terminal is enabled to determine the positioning integrity of the downlink positioning or the positioning integrity of the positioning combining uplink and downlink, thus providing an implementation of determining the positioning integrity for the RAT-dependent positioning technology.

FIG. 5 is a flowchart of a method for receiving error source information provided according to an embodiment of the present application. The method may be applied to a terminal. The method includes the following step.

In step 502, error source information for positioning transmitted by the LMF is received.

The positioning includes downlink positioning or positioning combining uplink and downlink. The error source information is used by the terminal to determine the positioning integrity of the positioning.

Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

Optionally, the error source information includes at least one of the following:
a location information error of a network device;
a time synchronization error between different network devices;
a timing error of the network device; or
a beam or antenna error of the network device.

Among them, the network device refers to a device participating in the foregoing positioning, for example, the network device is a base station (gNB) or a TRP participating in the positioning. The location information error of the network device includes an error of location information of the network device itself. The time synchronization error between different network devices include the deviation in local time between different network devices participating in the positioning. The timing error of the network device includes an error related to the timing of the network device. The beam or antenna error of the network device includes an error related to a beam received or transmitted by the network device or an antenna of the network device.

Optionally, the error source information is determined by the network device and reported to the LMF, or obtained by the LMF requesting to the network device.

Optionally, the error source information transmitted by the LMF to the terminal is carried in an LPP message, for example, it is carried in LPP Provide Assistance Information.

Optionally, the LMF may actively transmit the error source information to the terminal. Alternatively, the error source information transmitted by the LMF is transmitted based on a request of the terminal. That is, the terminal may transmit a request to the LMF, where the request is used to indicate the LMF to transmit the error source information. Optionally, the request is carried in an LPP message, for example, it is carried in LPP Request Assistance Information.

Optionally, the terminal may further receive the DNU information of the error source information transmitted by the LMF. The DNU information is used to indicate the terminal not to use the error source information to determine the positioning integrity of the positioning. For example, if the LMF transmits the location information error of the network device and the timing error of the network device to the terminal, since the location information value of the network device exceeds the distribution range of normal data, the LMF may transmit the DNU information to the terminal to indicate the terminal not to use the location information error source of the network device to determine the positioning integrity of the positioning. Optionally, the terminal may then use the timing error of the network device to determine the positioning integrity of the positioning.

In summary, according to the method provided in the embodiment, by transmitting the error source information for positioning to the terminal by the LMF, there is provided an implementation of exchanging error source information between the terminal and the LMF in downlink positioning or positioning combining uplink and downlink. According to the error source information, the terminal is enabled to determine the positioning integrity of the downlink positioning or the positioning integrity of the positioning combining uplink and downlink, thus providing an implementation of determining the positioning integrity for the RAT-dependent positioning technology.

According to the method provided in the embodiments of the present application, there is provided an implementation of exchanging error source information between the terminal and the LMF in downlink positioning or positioning combining uplink and downlink. According to the error source information, the terminal or the LMF may be enabled to determine the positioning integrity of the downlink positioning or the positioning integrity of the positioning combining uplink and downlink, thus providing an implementation of determining the positioning integrity for the RAT-dependent positioning technology. Specifically, the following cases may be included.
(1) The terminal transmits error source information for positioning to the LMF, and the LMF determines the situation about the positioning integrity of the positioning;
(2) The LMF transmits error source information for positioning to the terminal, and the terminal determines the situation about the positioning integrity of the positioning.

In addition, in case (1), it may further be classified into two cases that: the terminal transmits the error source information capability supported by the terminal to the LMF, and the terminal does not transmit the error source information capability supported by the terminal to the LMF. The foregoing cases are described below through three embodiments.

Following is for the case in which the terminal transmits the error source information for positioning to the LMF.

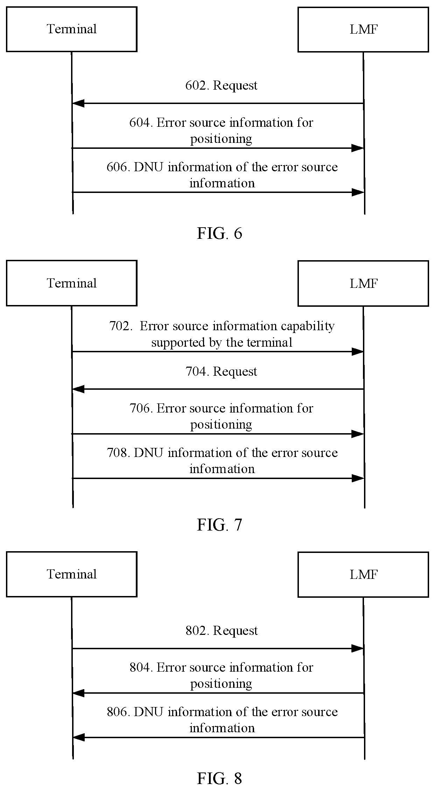

FIG. 6 is a flowchart of a method for transmitting error source information provided according to an embodiment of the present application

In step 602, the LMF transmits a request to the terminal.

The request is used to indicate the terminal to transmit the error source information for positioning. The positioning includes downlink positioning or positioning combining uplink and downlink. For example, the positioning refers to positioning based on DL-TDOA or DL-AOD or multi-RTT.

Optionally, the request is carried in an LPP message, for example, it is carried in LPP Request Location Information.

In step 604, the terminal transmits the error source information for positioning to the LMF.

The error source information is used by the LMF to determine the positioning integrity of the positioning. Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

The error source information transmitted by the terminal is determined by the terminal. Optionally, the error source information includes at least one of the following:
a measurement error of the terminal;
a timing error of the terminal; or
a beam or antenna error of the terminal.

Among them, the measurement error of the terminal includes an error generated when the terminal performs measurement, which includes an error generated when the terminal performs measurement on the positioning reference signal. The timing error of the terminal includes an error related to the timing of the terminal; for example, the timing error of the terminal includes the time difference of a transmitting signal between the antenna of the terminal and the baseband, and the clock deviation of the terminal itself, such as the difference between the clock of the terminal and the GNSS time. The beam or antenna error of the terminal includes an error related to a beam received or transmitted by the terminal or an antenna of the terminal; for example, the beam or antenna error of the terminal includes a deviation between a beam transmitting direction used by the terminal and an actual transmitting direction.

Optionally, the measurement error of the terminal includes at least one of the following:
a receiving-transmitting timing difference;
an RSTD;
a PRS-RSRP; or
a PRS-RSRPP.

Optionally, the error source information transmitted by the terminal to the LMF is carried in an LPP message, for example, it is carried in LPP Provide Location Information.

In step 606, the terminal transmits DNU information of the error source information to the LMF.

The DNU information is used to indicate the LMF not to use the error source information to determine the positioning integrity of the positioning. For example, if the terminal transmits the measurement error of the terminal and the timing error of the terminal to the LMF, since the measurement value of the terminal exceeds the distribution range of normal data, the terminal may transmit the DNU information to the LMF to indicate the LMF not to use the measurement error source of the terminal to determine the positioning integrity of the positioning. Optionally, the LMF may then use the timing error of the terminal to determine the positioning integrity of the positioning.

In summary, according to the method provided in the embodiment, by transmitting the error source information for positioning to the LMF by the terminal, there is provided an implementation of exchanging error source information between the terminal and the LMF in downlink positioning or positioning combining uplink and downlink. According to the error source information, the LMF is enabled to determine the positioning integrity of the downlink positioning or the positioning integrity of the positioning combining uplink and downlink, thus providing an implementation of determining the positioning integrity for the RAT-dependent positioning technology.

Following is for the case in which the terminal transmits the error source information capability supported by the terminal and the error source information for positioning to the LMF.

FIG. 7 is a flowchart of a method for transmitting error source information provided according to an embodiment of the present application.

In step 702, the terminal transmits an error source information capability supported by the terminal to the LMF.

The error source information capability supported by the terminal is used to reflect error source information supported by the terminal. Optionally, the LMF may obtain the error source information capability supported by the terminal, so that the LMF may determine whether to transmit a request for obtaining the error source information to the terminal. Furthermore, when the LMF requests the error source information to the terminal, the LMF may further request the error source information in a targeted manner according to the error source information capability supported by the terminal. For example, the LMF may request the timing error of the terminal in the error source information supported by the terminal.

In step 704, the LMF transmits a request to the terminal.

The request is used to indicate the terminal to transmit the error source information for positioning. The positioning includes downlink positioning or positioning combining uplink and downlink. For example, the positioning refers to positioning based on DL-TDOA or DL-AOD or multi-RTT.

Optionally, the request is carried in an LPP message, for example, it is carried in LPP Request Location Information.

In step 706, the terminal transmits the error source information for positioning to the LMF.

The error source information is used by the LMF to determine the positioning integrity of the positioning. Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

The error source information transmitted by the terminal is determined by the terminal. Optionally, the error source information includes at least one of the following:
a measurement error of the terminal;
a timing error of the terminal; or
a beam or antenna error of the terminal.

Among them, the measurement error of the terminal includes an error generated when the terminal performs measurement, which includes an error generated when the terminal performs measurement on the positioning reference signal. The timing error of the terminal includes an error related to the timing of the terminal; for example, the timing error of the terminal includes the time difference of a transmitting signal between the antenna of the terminal and the baseband, and the clock deviation of the terminal itself, such as the difference between the clock of the terminal and the GNSS time. The beam or antenna error of the terminal includes an error related to a beam received or transmitted by the terminal or an antenna of the terminal; for example, the beam or antenna error of the terminal includes a deviation between a beam transmitting direction used by the terminal and an actual transmitting direction.

Optionally, the measurement error of the terminal includes at least one of the following:
a receiving-transmitting timing difference;
an RSTD;
a PRS-RSRP; or
a PRS-RSRPP.

Optionally, the error source information transmitted by the terminal to the LMF is carried in an LPP message, for example, it is carried in LPP Provide Location Information.

In step 708, the terminal transmits the DNU information of the error source information to the LMF.

The DNU information is used to indicate the LMF not to use the error source information to determine the positioning integrity of the positioning. For example, if the terminal transmits the measurement error of the terminal and the timing error of the terminal to the LMF, since the measurement value of the terminal exceeds the distribution range of normal data, the terminal may transmit the DNU information to the LMF to indicate the LMF not to use the measurement error source of the terminal to determine the positioning integrity of the positioning. Optionally, the LMF may then use the timing error of the terminal to determine the positioning integrity of the positioning.

In summary, according to the method provided in the embodiment, by transmitting the error source information for positioning to the LMF by the terminal, there is provided an implementation of exchanging error source information between the terminal and the LMF in downlink positioning or positioning combining uplink and downlink. According to the error source information, the LMF is enabled to determine the positioning integrity of the downlink positioning or the positioning integrity of the positioning combining uplink and downlink, thus providing an implementation of determining the positioning integrity for the RAT-dependent positioning technology.

Following is for the case in which the LMF transmits error source information for positioning to the terminal.

FIG. 8 is a flowchart of a method for transmitting error source information provided according to an embodiment of the present application.

In step 802, the terminal transmits a request to the LMF.

The request is used to indicate the LMF to transmit the error source information for positioning. The positioning includes downlink positioning or positioning combining uplink and downlink. For example, the positioning refers to positioning based on DL-TDOA or DL-AOD or multi-RTT.

Optionally, the request is carried in an LPP message, for example, it is carried in LPP Request Assistance Information.

In step 804, the LMF transmits the error source information for positioning to the terminal.

The error source information is used by the terminal to determine the positioning integrity of the positioning. Optionally, the positioning integrity includes at least one of the following:
a reliability of accuracy of location information provided by a positioning system; or
a capability of transmitting a valid alert when the positioning system does not satisfy the predetermined operating condition.

Among them, the positioning system is a system that performs the foregoing positioning; for example, the positioning system includes one or more of an LMF, a terminal, and a network device. The location information is information or data related to location or positioning. Optionally, not satisfying the predetermined operation condition includes a PL being greater than an AL, where PL is obtained by calculating according to the error source information, and AL is preset. AL is the allowed maximum positioning error that enables the positioning system to be used in a predetermined application.

Optionally, the error source information includes at least one of the following:
a location information error of a network device;
a time synchronization error between different network devices;
a timing error of the network device; or
a beam or antenna error of the network device.

Among them, the network device refers to a device participating in the foregoing positioning, for example, the network device is a base station (gNB) or a TRP participating in the positioning. The location information error of the network device includes an error of location information of the network device itself. For example, the location information error of the network device is a deviation of the location information determined by the network device based on the GNSS. The time synchronization error between different network devices includes the deviation in local time between different network devices participating in the positioning. The timing error of the network device includes an error related to the timing of the network device. For example, the timing error of the network device is a difference between the clock of the network device and the GNSS time. The beam or antenna error of the network device includes an error related to a beam received or transmitted by the network device or an antenna of the network device. For example, the beam or antenna error of the network device includes a deviation between a beam transmitting direction used by the network device and an actual transmitting direction.

Optionally, the error source information is determined by the network device and reported to the LMF, or obtained by the LMF requesting to the network device.

Optionally, the error source information transmitted by the LMF to the terminal is carried in an LPP message, for example, it is carried in LPP Provide Assistance Information.

In step 806, the LMF transmits DNU information of the error source information to the terminal.

The DNU information is used to indicate the terminal not to use the error source information to determine the positioning integrity of the positioning. For example, if the LMF transmits the location information error of the network device and the timing error of the network device to the terminal, since the location information value of the network device exceeds the distribution range of normal data, the LMF may transmit the DNU information to the terminal to indicate the terminal not to use the location information error source of the network device to determine the positioning integrity of the positioning. Optionally, the terminal may then use the timing error of the network device to determine the positioning integrity of the positioning.

In summary, according to the method provided in the embodiment, by transmitting the error source information for positioning to the terminal by the LMF, there is provided an implementation of exchanging error source information between the terminal and the LMF in downlink positioning or positioning combining uplink and downlink. According to the error source information, the terminal is enabled to determine the positioning integrity of the downlink positioning or the positioning integrity of the positioning combining uplink and downlink, thus providing an implementation of determining the positioning integrity for the RAT-dependent positioning technology.

It should be noted that the sequence of the steps in the methods provided in the embodiments of the present application may be appropriately adjusted, the steps may also be correspondingly increased or decreased according to situations, and different steps may be freely combined to form a new embodiment. Any modified method that can be easily conceived of by those skilled in the art within the technical scope disclosed in the present application shall fall within the protection scope of the present application, and details are not described here again.

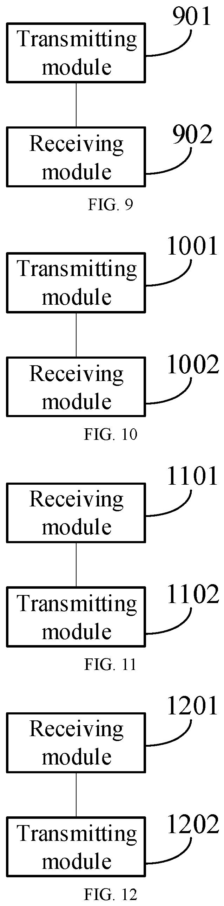

FIG. 9 is a structural block diagram of an apparatus for transmitting error source information according to an example embodiment of the present application. As shown in FIG. 9, the apparatus includes a transmitting module 901.

The transmitting module 901 is configured to transmit error source information for positioning to an LMF.

Among them, the positioning includes downlink positioning or positioning combining uplink and downlink.

In an optional design, the error source information is used by the LMF to determine the positioning integrity of the positioning.

In an optional design, the positioning integrity includes at least one of the following:
a reliability of accuracy of location information provided by a positioning system; or
a capability of transmitting a valid alert when the positioning system does not satisfy the predetermined operating condition.

In an optional design, not satisfying the predetermined operation condition includes a PL being greater than an AL.

Among them, PL is obtained by calculating according to the error source information, and AL is preset.

In an optional design, the error source information includes at least one of the following:
a measurement error of the apparatus;
a timing error of the apparatus; or
a beam or antenna error of the apparatus.

In an optional design, a measurement error of the apparatus includes at least one of the following:
a receiving-transmitting timing difference;
an RSTD;
a PRS-RSRP; or
a PRS-RSRPP.

In an optional design, the error source information is carried in an LPP message.

In an optional design, the apparatus further includes a receiving module 902.

The receiving module 902 is configured to receive a request transmitted by the LMF.

Among them, the request is used to indicate the apparatus to transmit the error source information.

In an optional design, the request is carried in an LPP message.

In an optional design, the transmitting module 901 is configured to:
transmit an error source information capability supported by the apparatus to the LMF.

Among them, the error source information capability supported by the apparatus is used to reflect error source information supported by the apparatus.

In an optional design, the transmitting module 901 is configured to:
transmit DNU information of the error source information to the LMF.

Among them, the DNU information is used to indicate that the LMF not to use the error source information to determine the positioning integrity of the positioning.

FIG. 10 is a structural block diagram of an apparatus for transmitting error source information provided according to an example embodiment of the present application. As shown in FIG. 10, the apparatus includes a transmitting module 1001.

The transmitting module 1001 is configured to transmit error source information for positioning to a terminal.

Among them, the positioning includes downlink positioning or positioning combining uplink and downlink.

In an optional design, the error source information is used by the terminal to determine the positioning integrity of the positioning.

In an optional design, the positioning integrity includes at least one of the following:
a reliability of accuracy of location information provided by a positioning system; or
a capability of transmitting a valid alert when the positioning system does not satisfy the predetermined operating condition.

In an optional design, not satisfying the predetermined operation condition includes a PL being greater than an AL.

Among them, PL is obtained by calculating according to the error source information, and AL is preset.

In an optional design, the error source information includes at least one of the following:
a location information error of the network device;
a time synchronization error between different network devices;
a timing error of the network device; or
a beam or an antenna error of the network device.

In an optional design, the error source information is carried in an LPP message.

In an optional design, the apparatus further includes a receiving module 1002.

The receiving module 1002 is configured to receive a request transmitted by the terminal.

Among them, the request is used to indicate the apparatus to transmit the error source information.

In an optional design, the request is carried in an LPP message.

In an optional design, the transmitting module 1001 is configured to:

transmit DNU information of the error source information to the terminal.

Among them, the DNU information is used to indicate that the terminal not to use the error source information to determine the positioning integrity of the positioning.

FIG. 11 is a structural block diagram of an apparatus for receiving error source information provided according to an example embodiment of the present application. As shown in FIG. 11, the apparatus includes a receiving module 1101.

The receiving module 1101 is configured to receive error source information for positioning transmitted by a terminal.

Among them, the positioning includes downlink positioning or positioning combining uplink and downlink.

In an optional design, the error source information is used by the apparatus to determine the positioning integrity of the positioning.

In an optional design, the positioning integrity includes at least one of the following:
a reliability of accuracy of location information provided by a positioning system; or
a capability of transmitting a valid alert when the positioning system does not satisfy the predetermined operation condition.

In an optional design, not satisfying the predetermined operation condition includes a PL being greater than an AL.

Among them, PL is obtained by calculating according to the error source information, and AL is preset.

In an optional design, the error source information includes at least one of the following:
a measurement error of the terminal;
a timing error of the terminal; or
a beam or an antenna error of the terminal.

In an optional design, the measurement error of the terminal includes at least one of the following:
A receiving-transmitting timing difference;
an RSTD;
a PRS-RSRP; or
a PRS-RSRPP.

In an optional design, the error source information is carried in an LPP message.

In an optional design, the apparatus further includes a transmitting module 1102.

The transmitting module 1102 is configured to transmit a request to the terminal.

Among them, the request is used to indicate the terminal to transmit the error source information.

In an optional design, the request is carried in an LPP message.

In an optional design, the receiving module 1101 is configured to:
receive an error source information capability supported by the terminal transmitted by the terminal.

Among them, the error source information capability supported by the terminal is used to reflect error source information supported by the terminal.

In an optional design, the receiving module 1101 is configured to:
receive DNU information of the error source information transmitted by the terminal.

Among them, the DNU information is used to indicate that the apparatus not to use the error source information to determine the positioning integrity of the positioning.

FIG. 12 is a structural block diagram of an apparatus for receiving error source information provided according to an example embodiment of the present application. As shown in FIG. 12, the apparatus includes a receiving module 1201.

The receiving module 1201 is configured to receive error source information for positioning transmitted by an LMF.

Among them, the positioning includes downlink positioning or positioning combining uplink and downlink.

In an optional design, the error source information is used by the apparatus to determine the positioning integrity of the positioning.

In an optional design, the positioning integrity includes at least one of the following:
a reliability of accuracy of location information provided by a positioning system; or
a capability of transmitting a valid alert when the positioning system does not satisfy the predetermined operating condition.

In an optional design, not satisfying the predetermined operation condition includes a PL being greater than an AL.

Among them, PL is obtained by calculating according to the error source information, and AL is preset.

In an optional design, the error source information includes at least one of the following:
a location information error of the network device;
a time synchronization error between different network devices;
a timing error of the network device; or
a beam or an antenna error of the network device.

In an optional design, the error source information is carried in an LPP message.

In an optional design, the apparatus further includes a transmitting module 1202.

The transmitting module 1202 is configured to transmit a request to the LMF.

Among them, the request is used to indicate the LMF to transmit the error source information.

In an optional design, the request is carried in an LPP message.

In an optional design, the receiving module 1201 is configured to:
receive DNU information of the error source information transmitted by the LMF.

Among them, the DNU information is used to indicate that the apparatus not to use the error source information to determine the positioning integrity of the positioning.

It should be noted that, when the apparatus provided in the foregoing embodiment implements the function of the apparatus, division of the foregoing functional modules is only taken as an example for illustration. In an actual application, the foregoing function may be distributed to and completed by different functional modules according to actual needs; that is, the content structure of the device is divided into different functional modules to complete all or some of the functions described above.

With regard to the apparatus in the above embodiments, the specific manner in which the modules perform operations has been described in detail in the embodiments related to the method, which will not be described in detail here.

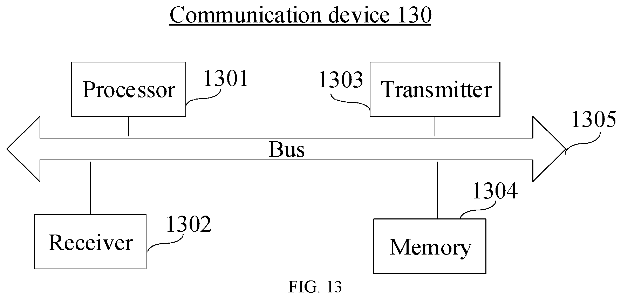

FIG. 13 is a schematic structural diagram of a communication device provided according to an example embodiment of the present application, where the communication device 130 includes a processor 1301, a receiver 1302, a transmitter 1303, a memory 1304, and a bus 1305.

The processor 1301 includes one or more processing cores, and the processor 1301 executes various functional applications and information processing by running a software program and a module.

The receiver 1302 and the transmitter 1303 may be implemented as a communication component, and the communication component may be a communication chip.

The memory 1304 is connected to the processor 1301 by using the bus 1305.

The memory 1304 may be configured to store at least one instruction, and the processor 1301 is configured to execute the at least one instruction to implement steps in the foregoing method embodiments.

In addition, the memory 1304 may be implemented by any type of volatile or non-volatile storage device or a combination of them, and the volatile or non-volatile storage device includes but is not limited to: a disk or optical disk, an electrically-erasable programmable read-only memory (EEPROM), an erasable programmable read only memory (EPROM), a static random access memory (SRAM), a read-only memory (ROM), a magnetic memory, a flash memory, and a programmable read-only memory (PROM).

Among them, when the communication device is implemented as a terminal, the processor and the transceiver in the communication device revolved in the embodiments of the present application may be implemented together as one communications chip, or the transceiver separately forms a communications chip. Among them, the transmitter in the transceiver performs the transmitting step performed by the terminal in any one of the foregoing methods, the receiver in the transceiver performs the receiving step performed by the terminal in any one of the foregoing methods, and the processor performs the steps other than the transmitting step and the receiving step. Details are not described here again.

Among them, when the communication device is implemented as an LMF, the processor and the transceiver in the communication device revolved in the embodiments of the present application may be implemented together as one communications chip, or the transceiver separately forms a communications chip. Among them, the transmitter in the transceiver performs the transmitting step performed by the LMF in any one of the foregoing methods, the receiver in the transceiver performs the receiving step performed by the LMF in any one of the foregoing methods, and the processor performs the steps other than the transmitting steps and the receiving step. Details are not described here again.

In an example embodiment, there is further provided a computer-readable storage medium, where the computer-readable storage medium stores at least one instruction, at least one program, a code set or an instruction set. The at least one instruction, the at least one program, the code set, or the instruction set is loaded and executed by the processor to implement the method for activating or deactivating an uplink positioning reference signal provided in the foregoing method embodiments.

In an example embodiment, there is further provided a chip, where the chip includes a programmable logic circuit and/or a program instruction, and when the chip runs on a communication device, the chip is configured to implement the method for activating or deactivating the uplink positioning reference signal provided in the foregoing method embodiments.

In an example embodiment, there is further provided a computer program product, and when the computer program product runs on a processor of a computer device, the computer device is enabled to perform the foregoing method for activating or deactivating an uplink positioning reference signal.

Those skilled in the art should be aware that, in the foregoing one or more examples, the functions described in the embodiments of the present application may be implemented by hardware, software, firmware, or any combination of them. When implemented by software, these functions may be stored in a computer-readable medium or transmitted as one or more instructions or code on a computer-readable medium. The computer-readable medium includes both a computer storage medium and a communication medium, where the communication medium includes any medium that facilitates transfer of a computer program from one place to another. The storage medium may be any available medium accessible to a general-purpose computer or a special-purpose computer.

The above is only example embodiments of the present disclosure, and is not intended to limit the present disclosure. Any modifications, equivalent replacements, improvements, or the like, made within the spirit and principle of the present disclosure, shall fall within the protection scope of the present disclosure.

## Claims

1. A method for transmitting error source information, comprising:
transmitting, by a terminal, error source information for positioning to a location management function (LMF), wherein the error source information is used by the LMF to determine positioning integrity of the positioning; or
transmitting, by the LMF, error source information for positioning to the terminal, wherein the error source information is used by the terminal to determine positioning integrity of the positioning;
wherein the positioning comprises downlink positioning or positioning combining uplink and downlink.

2. The method according to claim 1, wherein the positioning integrity comprises at least one of:
a reliability of accuracy of location information provided by a positioning system; or
a capability of transmitting a valid alert when the positioning system does not satisfy a predetermined operation condition;
wherein not satisfying the predetermined operation condition comprises a protection level (PL) being greater than an alert limit (AL), the PL is obtained by calculating according to the error source information, and the AL is preset.

3. The method according to claim 1 or 2, wherein the error source information transmitted by the terminal to the LMF comprises at least one of:
a measurement error of the terminal;
a timing error of the terminal; or
a beam or antenna error of the terminal.

4. The method according to claim 3, wherein the measurement error of the terminal comprises at least one of:
a receiving-transmitting timing difference;
a reference signal time difference (RSTD);
a positioning reference signal (PRS)-reference signal receiving power (RSRP); or
a PRS-reference signal received path power (RSRPP).

5. The method according to claim 1 or 2, wherein the error source information transmitted by the LMF to the terminal comprises at least one of:
a location information error of a network device;
a time synchronization error between different network devices;
a timing error of the network device; or
a beam or antenna error of the network device.

6. The method according to claim 1 or 2, further comprising:
receiving, by the terminal when transmitting the error source information to the LMF, a request transmitted by the LMF, wherein the request is used to indicate the terminal to transmit the error source information; and
receiving, by the LMF when transmitting the error source information to the terminal, a request transmitted by the terminal, wherein the request is used to indicate the LMF to transmit the error source information.

7. The method according to claim 1 or 2, further comprising:
transmitting, by the terminal when transmitting the error source information to the LMF, an error source information capability supported by the terminal to the LMF, wherein the error source information capability supported by the terminal is used to reflect error source information supported by the terminal.

8. The method according to claim 1 or 2, further comprising:
transmitting, by the terminal when transmitting the error source information to the LMF, Do Not Use (DNU) information of the error source information to the LMF, wherein the DNU information is used to indicate the LMF not to use the error source information to determine the positioning integrity of the positioning; and
transmitting, by the LMF when transmitting the error source information to the terminal, DNU information of the error source information to the terminal, wherein the DNU information is used to indicate the terminal not to use the error source information to determine the positioning integrity of the positioning.

9. A method for receiving error source information, comprising:
receiving, by an LMF, error source information for positioning transmitted by a terminal, wherein the error source information is used by the LMF to determine positioning integrity of the positioning; or
receiving, by the terminal, error source information for positioning transmitted by the LMF, wherein the error source information is used by the terminal to determine positioning integrity of the positioning;
wherein the positioning comprises downlink positioning or positioning combining uplink and downlink.

10. The method according to claim 9, wherein the positioning integrity comprises at least one of:
a reliability of accuracy of location information provided by a positioning system; or
a capability of transmitting a valid alert when the positioning system does not satisfy a predetermined operation condition;
wherein not satisfying the predetermined operation condition comprises a PL being greater than an Al, the PL is obtained by calculating according to the error source information, and the AL is preset.

11. The method according to claim 9 or 10, wherein the error source information transmitted by the terminal to the LMF comprises at least one of:
a measurement error of the terminal;
a timing error of the terminal;
a beam or antenna error of the terminal.

12. The method according to claim 11, wherein the measurement error of the terminal comprises at least one of:
a receiving-transmitting timing difference;
an RSTD;
a PRS-RSRP; or
a PRS-RSRPP.

13. The method according to claim 9 or 10, wherein the error source information transmitted by the LMF to the terminal comprises at least one of:
a location information error of a network device;
a time synchronization error between different network devices;
a timing error of the network device; or
a beam or antenna error of the network device.

14. The method according to claim 9 or 10, further comprising:
transmitting, by the LMF when receiving the error source information transmitted by the terminal, a request to the terminal, wherein the request is used to indicate the terminal to transmit the error source information; and
transmitting, by the terminal when receiving the error source information transmitted by the LMF, a request to the LMF, wherein the request is used to indicate the LMF to transmit the error source information.

15. The method according to claim 9 or 10, further comprising:
receiving, by the LMF when receiving the error source information transmitted by the terminal, error source information capability supported by the terminal transmitted by the terminal, wherein the error source information capability supported by the terminal is used to reflect error source information supported by the terminal.

16. The method according to claim 9 or 10, further comprising:
receiving, by the LMF when receiving the error source information transmitted by the terminal, DNU information of the error source information transmitted by the terminal, wherein the DNU information is used to indicate the LMF not to use the error source information to determine the positioning integrity of the positioning; and
receiving, by the terminal when receiving the error source information transmitted by the LMF, DNU information of the error source information transmitted by the LMF, wherein the DNU information is used to indicate the terminal not to use the error source information to determine the positioning integrity of the positioning.

17. An apparatus for transmitting error source information, comprising:
a transmitting module, configured to: transmit, by the apparatus, error source information for positioning to an LMF, wherein the error source information is used by the LMF to determine positioning integrity of the positioning; or
transmit, by the apparatus, error source information for positioning to a terminal, wherein the error source information is used by the terminal to determine positioning integrity of the positioning;
wherein the positioning comprises downlink positioning or positioning combining uplink and downlink.

18. An apparatus for receiving error source information, comprising:
a receiving module, configured to: receive, by the apparatus, error source information for positioning transmitted by a terminal, wherein the error source information is used by the apparatus to determine positioning integrity of the positioning; or
receive, by the apparatus, error source information for positioning transmitted by an LMF, wherein the error source information is used by the apparatus to determine positioning integrity of the positioning;
wherein the positioning comprises downlink positioning or positioning combining uplink and downlink.

19. A communication device, comprising:
a processor;
a transceiver, connected to the processor; and
a memory, configured to store an executable instruction by the processor;
wherein the processor is configured to load and execute the executable instruction to implement the method for transmitting error source information according to any one of claims 1 to 8, or the method for receiving error source information according to any one of claims 9 to 16.

20. A computer-readable storage medium, wherein an executable instruction is stored in the readable storage medium, and the executable instruction is loaded and executed by a processor to implement the method for transmitting error source information according to any one of claims 1 to 8, or the method for receiving error source information according to any one of claims 9 to 16.
